# EUROPEAN PATENT APPLICATION

(11) **EP 1 533 016 A1**
(43) Date of publication of application: **25.05.2005**
(21) Application number: 03425752.7
(22) Date of filing: 24.11.2003
(51) Int. Cl.: B01D 46/04, B01D 46/10

(54) **Filtering device for separating dust from aeriform fluids and in particular for separating textile dust**

(71) Applicant: Grieco Annamaria, 20050 Triuggio (IT)
(72) Inventor: Beretta, Valter, 20050 Triuggio MI (IT)
(74) Representative: Arena, Giovanni

(57) **Abstract**

The filtering device is characterized by the presence in combination of the following items:
- one filter housing chamber (1,12) for housing the filter,
- at least one stationary and flat filtering diaphragm (2,2',14,14') occupying one flat wall of the chamber and suited to separating fine dust,
- one mouth (3,3',15,15') sucking dust deposited on the filter, having elongated form and placed in front of and near the above mentioned filtering diaphragm and rotating around an axis perpendicular to the filtering diaphragm plane and passing through its center and of a length and arrangement such as to pass along the entire surface of the filtering diaphragm at each rotation,
- one cylindrical suction duct (4,16) to which leads the above mentioned suction mouth and arranged coaxially with the above mentioned axis and rotating around it at the same angular velocity as the mouth, and
- one extractor fan (5) located on the housing chamber wall or leading to it and designed to cause inlet of dusty air into the filter chamber and feed it back into the environment in which the chamber is located or send it to a conditioning plant.

## Description

The subject of the present invention is a filtering device for separating dust from aeriform fluids and particularly suited for the separation of textile dust.

In some industrial branches, the problem of cleansing the air of the work environment of dust produced during production or machining processes is very important. This applies in particular to the textile and paper industries.

### BACKGROUND OF THE INVENTION

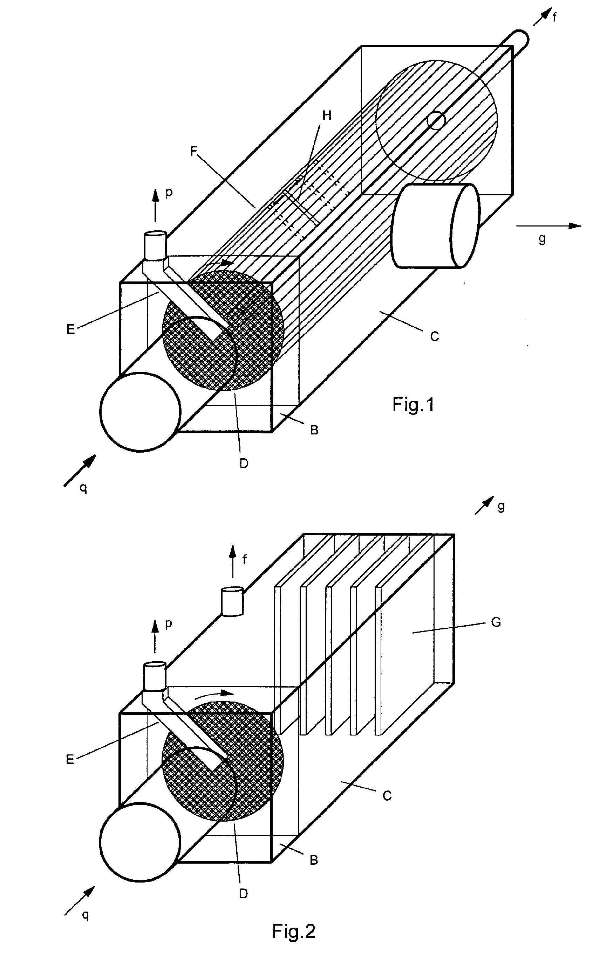

Various systems for cleansing the air of textile dust are known. Two of these are diagramed in Figs. 1 and 2.

According to these diagrams the dusty air "q" is first fed into a chamber B and then into a second chamber C from which it issues in the form of clean air "g". Passage of the air from the first chamber to the second chamber takes place through a filter disk D made to rotate around its axis and separating the less fine dust "p" (waste, fibers et cetera).

Dust deposited on D is carried off through a nozzle E whose suction mouth is arranged in a stationary manner along a radius of the filter disk D.

Dusty air issueing from D is then passed through a stationary filtering diaphragm F arranged along the side surface of a cylindrical chamber (Fig. 1) or through filtering diaphragms arranged on a series of flat panels G (Fig. 2) on which the fine dust is stopped. In the case of Fig. 1 the fine dust withheld on the cylindrical filtering diaphragm is collected by a series of nozzles H arranged near the internal surface of the filter and animated by both rotary and translational motion around the axis of the cylindrical surface and in the direction of said axis.

In the case of Fig. 2, the fine dust deposited on the panels is collected by a series of sucking nozzles moved by robots along the entire filtering surface of the panels.

The main drawbacks of the solutions illustrated in Figs. 1 and 2 are considerable cost and structural complexity as well as large space occupied which in purification systems of large capacity can reach more than 50 m³. The solution of Fig. 2 is more advantageous than that of Fig. 1 because it concerns the lesser space occupied requested for a given air-carrying capacity but is less cost effective as regards problems of maintenance of the operating robots for the sucking nozzles because said robots are forced to operate in a dusty environment.

In the solutions of Figs. 1 and 2, the first chamber B and its filter D are absent if in the air to be purified there is only fine dust.

### OBJECTS OF THE INVENTION

The present invention proposes the embodiment of a filtering device which while being very reliable and effective due to its compactness, simplicity and low cost would obviate the above mentioned shortcomings and in particular those of cost, structural complexity, power consumption, maintenance, great space occupied and limited filtration efficiency.

### SUMMARY OF THE INVENTION

The filtering device of the present invention is characterized in accordance with the solution idea of more general significance by the presence in combination of the following items:
- one filter housing chamber (1,12) for housing the filter,
- at least one stationary and flat filtering diaphragm (2,2',14,14') occupying one flat wall of the chamber and suited to separating fine dust,
- one mouth (3,3',15,15') sucking dust deposited on the filter, having elongated form and placed in front of and near the above mentioned filtering diaphragm and rotating around an axis perpendicular to the filtering diaphragm plane and passing through its center and of a length and arrangement such as to pass along the entire surface of the filtering diaphragm at each rotation,
- one cylindrical suction duct (4,16) to which leads the above mentioned suction mouth and arranged coaxially with the above mentioned axis and rotating around it at the same angular velocity as the mouth, and
- one extractor fan (5) located on the housing chamber wall or leading to it and designed to cause inlet of dusty air into the filter chamber and feed it back into the environment in which the chamber is located or send it to a conditioning plant.

If the filtering device is intended to filter both fine and coarse dust the above mentioned filter chamber (12) has a smooth inner surface virtually in cylindrical shape and has a mouth (13) for inlet of dusty air located at the edge of the filtering chamber surface and shaped in such a manner as to create an entering flow of dusty air tangent to the curved surface of the chamber and directed at a right angle to the direction of the cylinder axis in accordance with which the filter chamber is shaped.

Other preferred forms of embodiment of the above mentioned solution idea are given in the claims below.

### BRIEF DESCRIPTION OF THE DRAWINGS

To better clarify the purposes and characteristics of the present invention exemplifying preferred embodiments thereof are described below and illustrated in the annexed drawings wherein:
Figs.3-4: show a first embodiment of a filter in accordance with the present invention,
Figs.5-6: show a first variant of the filter of figs 3-4,
Figs.7-8: show a second variant of the filter of figs 3-4,
Fig.9: shows a second embodiment of a filter in accordance with the present invention,

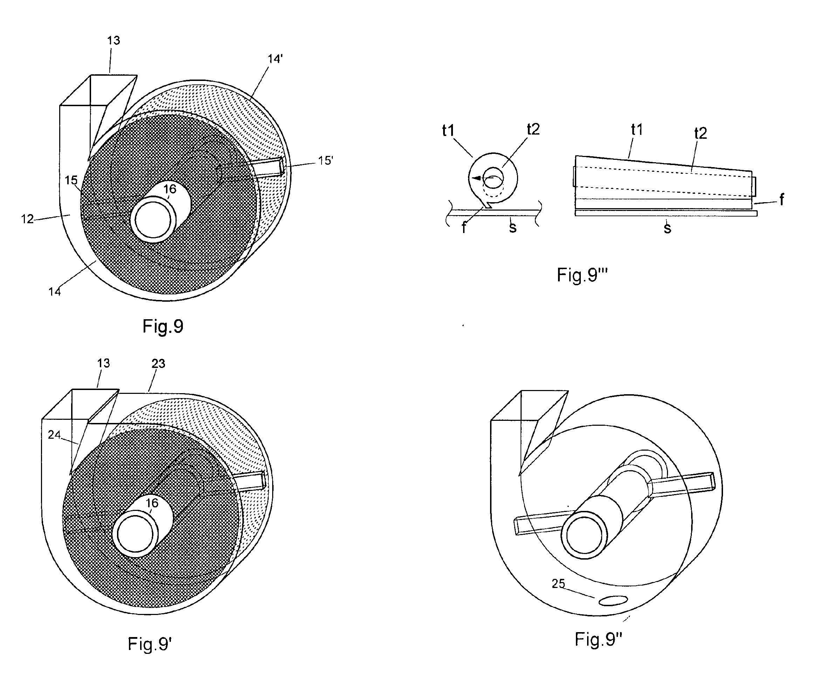

Figs.9'-9": show variants of the filter of fig 9,
Fig.9'": shows a preferred embodiment of the dust suction mouth 15 of the examples of figs 9 and 9',

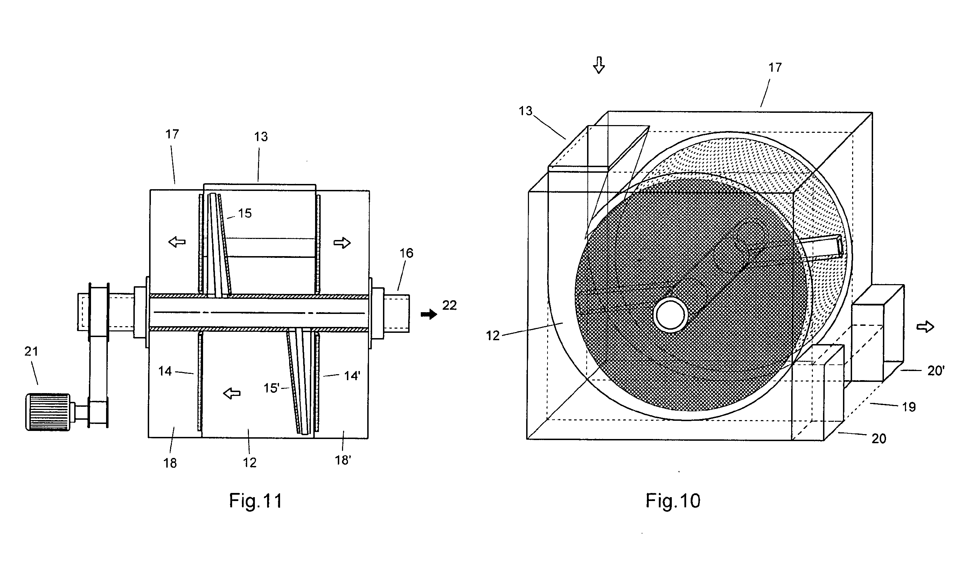

Figs. 10-11: show the filter of Fig. 9 located within an associated housing,

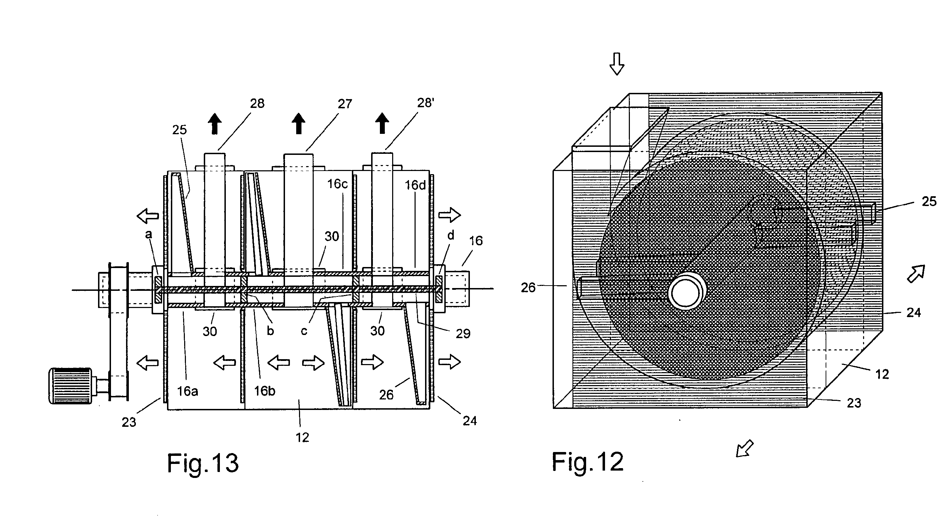

Figs.12-13: show a variant of the filter of Fig. 10-11 designed to assure a considerable increase in filtering efficiency,

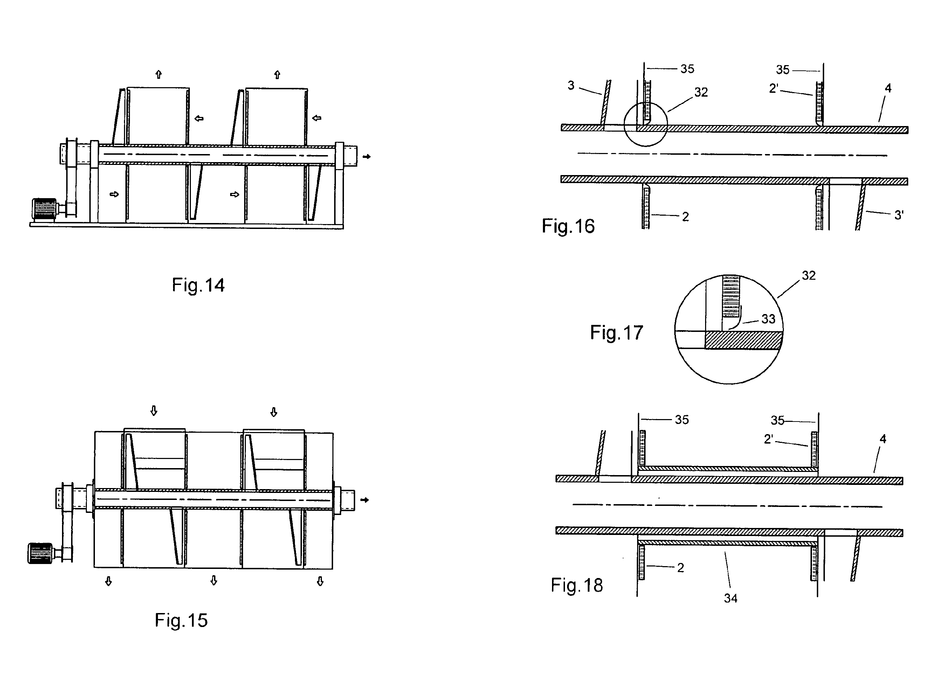

Figs.14-15: show examples of filters in accordance with the present invention with 4 filtering diaphragms, and
Figs. 16-18: show a variant of the means designed to prevent passage of dust in the crack between the filtering diaphragm and the rotating support duct of the suction mouths.

### DESCRIPTION OF THE PREFERRED EMBODIMENTS

The solution idea underlying the present invention originates from the intuition that the first filtering diaphragm D illustrated diagrammatically in figs 1 and 2 could be advantageously adapted to filtration of fine instead of coarse dust as takes place in the diagrams of the above mentioned figs when two conditions have been met, to wit,
- the filtering diaphragm is also suited to separation of fine dust, and
- this diaphragm is not moving but is stationary since the mouth sucking the dust deposited on the diaphragm is in rotary movement.

Indeed, even if in the systems shown in figures 1 and 2 the filtering diaphragm D were made of a material suited to retaining even fine dust, the filtering effect for this dust would be compromised because a considerable part of the fine dust would manage to pass beyond diaphragm D because of the long air space between the rotating edge of the diaphragm and the near edge of the wall of chamber B on which the diaphragm is fitted and this would be so even when a sealing gasket is installed along said edges. This seal would be compromised even by an imperfect coplanarity between the filtering diaphragm and the wall in which it is fitted.

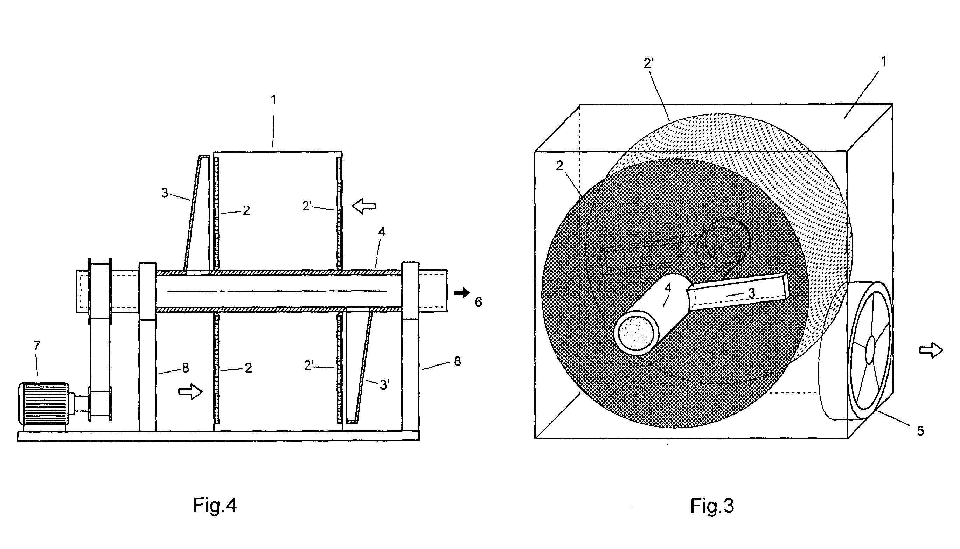

A first embodiment of a filter in accordance with the present invention is illustrated in Fig. 3. It is designed in particular for filtering environmental air in which the concentration of fine dust is lower than the safe limit (1,0 mg/m³) beneath which air is breathable by those working in the environment so that ducts designed for taking dusty air directly from the sources of such dust (textile machines et cetera) and inputting it in the filter inlet are not necessary.

In accordance with the solution idea underlying the first embodiment the filter comprises the following items.
- one filter housing chamber 1,
- at least one stationary flat filtering diaphragm 2 (2') in disk form and occupying one wall of the chamber and designed for separating fine dust,
- one elongated suction mouth 3 (3') placed outside of said chamber in front of and near said filtering diaphragm and rotating around an axis perpendicular to the plane of the filtering diaphragm and passing through its center and having length and arrangement such as to pass along the entire surface of the filtering diaphragm with each rotation,
- one cylindrical suction duct 4 to which leads the above mentioned suction mouth and which is arranged coaxially to said axis and rotating around it at the same angular velocity as the mouth, and
- one exhaust fan 5 placed on one wall of the housing chamber or leading to it and designed to suck the air contained in the housing and feed it back into the environment in which the housing is located or to send it to a conditioning plant not shown in the figures.

Fig. 4 shows a view of the device of Fig. 3 cross sectioned along a vertical plane carried along the axis of the cylindrical shaft 4 with the cross section assuming the suction mouths 3 and 3' arranged in a vertical position. It shows a tapered shape of said mouths and the outlet direction 6 of the fine dust collected by the suction mouths 3 and 3' as well as a motor 7 for driving the shaft 4 and two supports 8 for said shaft.

The filter of the example of figures 3 and 4 lends itself to installation directly in the environment whose air is to be filtered.

If the filter is to be installed outside said environment it is necessary to provide a duct for carrying the dusty air to the filter.

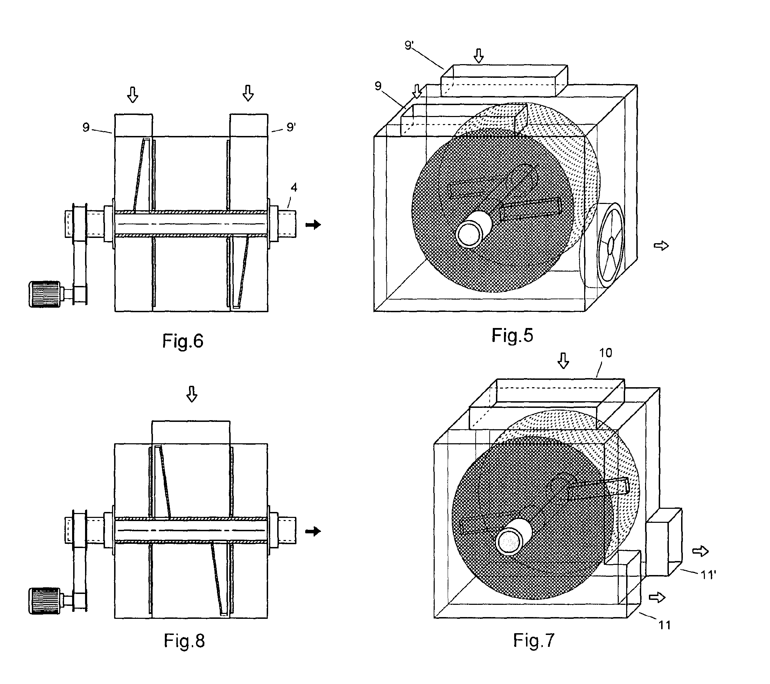

figures 5 and 6 show how in this case the filter of figures 3 and 4 must be integrated. In particular, these figures show the terminal part of two ducts 9 and 9' for carrying the dusty air to the filter.

figures 7 and 8 show a dual solution of the filter of figures 5 and 6. In accordance with this embodiment a single duct 10 and two ducts 11 and 11' for filtered air outlet are used with associated exhausters not shown in the figures.

A second embodiment of a filter in accordance with the present invention is shown in figures 9, 10 and 11. It is especially designed for filtering the air of working environments in which it is necessary to install exhaust ducts designed to take the dust and fiber waste directly from their sources such as textile machines, clipping machines et cetera. This dust is made up in large part of coarse dust and waste and only for a smaller part (for example 5%) of fine dust.

In accordance with the solution idea underlying the second embodiment example the filter comprises as the main component illustrated in Fig. 9 the following items:
- a filter chamber 12 with smooth internal surface in virtually cylindrical form,
- an opening 13 for dusty air inlet located in the margin of the surface of the filter chamber and shaped in such a manner as to create an incoming dusty air flow tangent to the curved surface of the chamber and directed at a right angle to the direction of the axis of the filter chamber conformation cylinder,
- at least one stationary flat filtering diaphragm 14 (14') located on a flat surface of the above mentioned chamber and designed for separation of the fine dust,
- one elongated suction mouth 15 (15') placed inside said chamber in front of and near said filtering diaphragm and rotating around the axis of said cylindrical chamber and of a length such as to lick with one of its ends the cylindrical surface of the chamber and extending its opening even to the terminal part opposite said surface so as to suck in the coarser dust which collects along the cylindrical surface and the fine dust which collects on the filtering diaphragm, and
- one cylindrical suction duct 16 to which leads the above mentioned suction mouth and which is arranged coaxially to the cylindrical chamber and rotating at the same angular velocity as the above mentioned suction mouth.

It is noted that the above mentioned characterization of the dusty air inlet opening 13 located in the margin of the filter chamber surface and shaped in such a manner as to create an entering dusty air flow tangent to the curved surface of the chamber and directed at a right angle to the direction of the filter chamber conformation cylinder axis is directed to create in the filter chamber a cyclonic movement of the dusty air so that the coarser dust and waste particles due to the effect of the centrifugal force to which they are subject are taken behind the cylindrical shell of the chamber and can be sucked in by the end of the suction mouth near said shell.

figures 9' and 9" concern two possible variants of the embodiment of Fig. 9.

The variant of Fig. 9' concerns the upper part of the cylindrical shell of the filter chamber 12 immediately near the mouth 13 which is a part which instead of being curved as in Fig. 9 is made with two flat surfaces 23 and 24 tangent to the original curved part. This variant is a construction simplification which however does not noticeably compromise the cyclonic movement of the dusty air inside the chamber.

Fig. 9"' shows a preferred embodiment of the exhaust mouth usable in the chamber of figures 9 and 9'. The right-hand part of Fig. 9"' shows a front view of the suction mouth shown in Fig. 9"' while the left-hand part shows a view from the right. The arrow indicates the direction of running of the mouth along the filtering diaphragm.

In accordance with this preferred embodiment the suction mouth consists of two tubes t1 and t2 fitted one in the other and of which the outer one has a slightly truncated cone shape and the inner one a virtually cylindrical shape. The outer tube is designed to suck fine dust and has its larger diameter end leading to the cylindrical suction duct (duct 16 of figures 9 and 9') and is also open laterally through a slot "f" provided with a mouth designed to run near the filtering diaphragm "s". The inner tube is designed for suction of the coarser dust and has one end entering the cylindrical suction duct and the other end designed to run close to the cylindrical surface of the filter chamber.

The variant of Fig. 9" provides that the suction mouths 15 and 15' can be closed in the terminal part opposite the cylindrical shell of the filter chamber and that the fibers and coarse waste circulating behind the cylindrical shell and which are no longer collected by said terminal part are sucked in by a purposeful suction duct whose inlet to the filter chamber consists of a hole 25 located in the lower part of the bottom of the shell.

Naturally the main component of figures 9 or 9' in which are provided two filtering diaphragms 14 and 14' can be located within a housing designed to convey the clean air issueing from the filtering diaphragms to an outlet duct.

An example of said main duct located within an associated housing is illustrated diagrammatically in figures 10 and 11.

In accordance with said figures the component of Fig. 9 is located within a boxed body 17 so as to create two chambers 18 and 18' beside the filtering diaphragms 14 and 14' i.e. side chambers into which clean air coming out of the diaphragms is let. If said chambers 18 and 18' are separated it is necessary to provide two openings 20 and 20' for outlet of clean air, i.e. one for each side chamber. If the side chambers 18 and 18' are mutually communicating above and below the cylindrical chamber the clean air can be conveyed into a single outlet opening, i.e. opening 19 shown in broken lines in Fig. 10.

Fig. 11 shows a view of the device of Fig. 10 cross sectioned along a vertical plane conducted along the axis of the cylindrical shaft 16 which is a cross section assuming the suction mouths 15 and 15' arranged in a cylindrical shape. The outer tube is designed to suck fine dust and has its larger diameter end leading to the cylindrical suction duct (duct 16 of figures 9 and 9') and is also open laterally through a slot "f" provided with a mouth designed to run near the filtering diaphragm "s". The inner tube is designed for suction of the coarser dust and has one end entering the cylindrical suction duct and the other end designed to run close to the cylindrical surface of the filter chamber.

The variant of Fig. 9" provides that the suction mouths 15 and 15' can be closed in the terminal part opposite the cylindrical shell of the filter chamber and that the fibers and coarse waste circulating behind the cylindrical shell and which are no longer collected by said terminal part are sucked in by a purposeful suction duct whose inlet to the filter chamber consists of a hole 25 located in the lower part of the bottom of the shell.

Naturally the main component of figures 9 or 9' in which are provided two filtering diaphragms 14 and 14' can be located within a housing designed to convey the clean air issueing from the filtering diaphragms to an outlet duct.

An example of said main duct located within an associated housing is illustrated diagrammatically in figures 10 and 11.

In accordance with said figures the component of Fig. 9 is located within a boxed body 17 so as to create two chambers 18 and 18' beside the filtering diaphragms 14 and 14' i.e. side chambers into which clean air coming out of the diaphragms is let. If said chambers 18 and 18' are separated it is necessary to provide two openings 20 and 20' for outlet of clean air, i.e. one for each side chamber. If the side chambers 18 and 18' are mutually communicating above and below the cylindrical chamber the clean air can be conveyed into a single outlet opening, i.e. opening 19 shown in broken lines in Fig. 10.

Fig. 11 shows a view of the device of Fig. 10 cross sectioned along a vertical plane conducted along the axis of the cylindrical shaft 16 which is a cross section assuming the suction mouths 15 and 15' arranged in a vertical cross section. It shows a tapered conformation of said mouths and the presence of a motor 21 for operation of the shaft 16 and the direction 22 of outlet of the dust collected by the suction mouths 15 and 15'.
figures 12 and 13 concern a variant of the filter of figures 10-11 to be used when high filtration efficiency is necessary.

This is due to the fact that the prior art filtering machines shown in figures 1 and 2 and the machines in accordance with the present invention as discussed in the above examples are designed to treat dusty air whose dustiness does not exceed certain limits in order to ensure that the dustiness of the air coming out of the filtering machines remains within acceptable values, for example 0.5 mg/m³.

Indeed, the machines shown in figures 1 and 2 have generally a filtering efficiency allowing treatment of dusty air having a maximum entering air dustiness of approximately 60 mg/m³. It follows that when the dustiness of the entering air taken directly at the points of origin of the dust, i.e. on machines such as for example in the hair-cutting or fiber-cutting zones of the teaseling or shearing machines, noticeably exceeds said maximum the machines of figures 1 and 2 require adoption of another filtration step downstream of the machines with resulting considerably increased costs and space occupied by the installation.

For the machines in accordance with the present invention mentioned in the above examples (figures 3-11) a filtering efficiency allowing treatment of dusty air with a maximum value of dustiness of the entering air of approximately 100 mg/m³ was ascertained.

If the dustiness of the entering air taken directly at the points of origin of the dust considerably exceeds said maximum value, the adoption of a variant of the filter of Fig. 10-11 like the one shown in figures 12 and 13, a variant designed for treatment of entering air of a dustiness in excess of 1000 mg/m³ might be advantageous.

As made clear in figures 12 and 13, the filter shown differs from that of figures 10 and 11 basically in that in place of the outlets 20 and 20' of figures 10 and 11 the two sides of the filter housing which are beside the internal filtering diaphragms are used for outlet of the filtered air subject to installation on said two sides of two external filtering diaphragms 23 and 24 with their suction mouths 25 and 26 from which to expel the filtered air. In this manner the in-coming dusty air undergoes two filtering stages with a resulting increase in filtering efficiency.

Another variant of the solution of figures 10 and 11 is that instead of using as in figures 10 and 11 a single outlet for the dust taken from the filtering diaphragms it is preferred to use an outlet 27 for the fine and coarse dust taken from the internal diaphragms separate from the outlets 28 and 28' of the fine dust taken by the external diaphragms to help the operations of separation of the fine dust from the coarse generally provided for the dust leaving a filter. For this purpose, the following are provided:
- three suction tubes 27, 28 and 28' whose internal mouths lead into the cylindrical duct 16,
- separation of the cylindrical duct 16 in four sections 16a, 16b, 16c and 16d each spaced from any nearby section by a section equal to the width of the flanking suction tube,
- three stationary cylindrical sleeves 30 each surrounding the terminal parts opposite a respective adjacent pair of the above mentioned sections and into which leads one of the three tubes 27, 28 and 28' so as to ensure air seal,
- a shaft 29 coaxial with the cylindrical duct 16 on which are keyed four circular plates a, b, c, d, welded opposite their edge to a section of the four sections 16a, 16b, 16c and 16d in order to make said sections integral and simultaneously make independent the path of the dust taken from the two internal diaphragms with respect to the path of the dust taken from the two external diaphragms.

It is clear that numerous modifications, adaptations, variants, omissions, additions and replacements of members with others functionally equivalent can be made without going beyond the spirit of the present invention and abandoning the protection of the following claims.

On this point it is observed that in the examples of figures 3-11 filters having only two filtering diaphragms are illustrated. This quantity is not binding. Fig. 14 shows for example a filter with four filtering diaphragms obtainable by placing side-by-side two filter units similar to that of Fig. 4 and in Fig. 15 is shown for example a filter with four filtering diaphragms obtainable by placing side-by-side two filter units similar to that of Fig. 11.

Fig. 18 shows a variant for the means adopted in the above examples to prevent passage of dust in the crack between the filtering diaphragm and the rotating shaft supporting the suction mouths. Indeed, as shown in Fig. 17, which is an enlargement of the detail 32 of Fig. 16 reproducing in turn a detail of Fig. 4, in the above examples an annular gasket 33 - for example, of felt - was adopted to prevent passage of dust.

The variant of Fig. 18 aims at avoiding any possible danger of insufficient seal of the gasket 33 by eliminating it and adopting in its place a tube or sleeve 34 with inside diameter greater than the outside diameter of the rotating tube 4 and fitted over same in the section included between the sides of the filtering diaphragms from which filtered air issues and welded at its ends to the walls 35 in which the filtering diaphragms are fitted.

The foregoing shows the advantages of the present invention stated previously in terms of high efficiency and reduced maintenance, power consumption and space occupied.

In particular, for equal hourly volume of air treated it allows a reduction in space occupied of at least 70% as compared with known devices of the type shown in Fig. 1 and at least 50% in comparison with those of Fig. 2.

## Claims

**1.** Filtering device for separating dust from aeriform fluids **characterized by** a combination of the following items:
- one filter chamber (1,12) for housing the filter,
- at least one stationary and flat filtering diaphragm (2,2',14,14') occupying one flat wall of the chamber and designed for separating fine dust,
- one elongated mouth (3,3',15,15') sucking dust deposited on the filter and placed in front of and near the above mentioned filtering diaphragm and rotating around an axis perpendicular to the filtering diaphragm plane and passing through its center and of a length and arrangement such as to pass with each rotation along the entire surface of the filtering diaphragm,
- one cylindrical suction duct (4,16) to which leads the above mentioned suction mouth and arranged coaxially with the above mentioned axis and rotating around it at the same angular velocity as the mouth, and
- one extractor fan (5) placed on the housing chamber wall or leading to it and designed to cause inlet of dusty air into the filter chamber and feed it back into the environment in which the chamber is located or send it to a conditioning plant.

**2.** Filtering device in accordance with claim 1 **characterized in that** the above mentioned filter chamber (12) has a smooth inner surface virtually cylindrical in form and a dusty air inlet mouth (13) located at the margin of the surface of the filter chamber and shaped in such a manner as to create an entering flow of dusty air tangent to the curved surface of the chamber and directed at a right angle to the direction of the axis of the cylinder in accordance with which the filter chamber is shaped.

**3.** Filtering device in accordance with claim 2 **characterized in that** the above mentioned suction mouth licks with one of its ends the curved surface of the filter chamber and extends its opening to the terminal part opposite said surface so as to suck the coarser dust which are collected and circulate behind said surface.

**4.** Filtering device in accordance with claim 3 **characterized in that** the above mentioned suction mouth consists of two tubes (t1,t2) fitted one into the other with the external tube being designed to suck fine dust and having one of its end leading to the cylindrical suction duct (16) and being open at the side through a crack (f) provided with a mouth designed to run near the filtering diaphragm with the inner tube being designed for suction of the coarse dust and having one end entering the cylindrical suction duct (16) and the other end designed to run close to the cylindrical surface of the filter chamber.

**5.** Filtering device in accordance with claim 4 **characterized in that** the external tube is slightly truncated cone shaped and the inner one is virtually cylindrical in shape.

**6.** Filtering device in accordance with claim 2 **characterized in that** in the lower part of the bottom of the filter chamber there is a suction hole designed to carry off coarser dust which are collected and circulate behind the cylindrical surface of the filter chamber.

**7.** Filtering device in accordance with claim 3 or 4 **characterized by** the further presence in combination of the following items:
- a side chamber in which the air issuing from the above mentioned first filtering diaphragm (14,14') is directly inlet,
- another stationary flat filtering diaphragm (23,24) located on a flat surface of the above mentioned side chamber opposite the one on which is located the above mentioned first filtering diaphragm and designed for separation of fine dust, and
- another elongated suction mouth (25,26) placed inside the above mentioned side chamber in front of and near the above mentioned additional filtering diaphragm and rotating around the axis of the above mentioned cylindrical chamber and of a length and arrangement such as to pass along the entire surface of the additional filtering diaphragm with each rotation and leading to the above mentioned cylindrical suction duct (16).

**7.** Filtering device in accordance with claim 1 or 2 **characterized by** at least two filtering diaphragms on mutually parallel planes and at least two related suction mouths as well as a tube (34) with inside diameter greater than the outside diameter of the cylindrical suction duct (4,16) fitted therein in the section included between the sides of the filtering diaphragms from which issues the filtered air and which is welded at its ends to the walls (35) in which are fitted the filtering diaphragms.

## Amended claims

### Amended claims in accordance with Rule 86(2) EPC.

**1.** Filtering device for separating dust from aeriform fluids comprising:
- one filter chamber (12) for housing the filter,
- at least one stationary and flat filtering diaphragm (14,14') occupying one flat wall of the chamber and designed for separating fine dust,
- one elongated mouth (15,15') sucking dust deposited on the filter and placed in front of and near the above mentioned filtering diaphragm and rotating around an axis perpendicular to the filtering diaphragm plane and passing through its center and of a length and arrangement such as to pass with each rotation along the entire surface of the filtering diaphragm,
- one cylindrical suction duct (16) to which leads the above mentioned suction mouth and arranged coaxially with the above mentioned axis and rotating around it at the same angular velocity as the mouth, and
- one extractor fan placed on the housing chamber wall or leading to it and designed to cause inlet of dusty air into the filter chamber and feed it back into the environment in which the chamber is located or send it to a conditioning plant,
**characterized in that** the above mentioned filter chamber (12) has a smooth inner surface virtually cylindrical in form and a dusty air inlet mouth (13) located at the margin of the surface of the filter chamber and shaped in such a manner as to create an entering flow of dusty air tangent to the curved surface of the chamber and directed at a right angle to the direction of the axis of the cylinder in accordance with which the filter chamber is shaped.

**2.** Filtering device in accordance with claim 1 **characterized in that** the above mentioned suction mouth licks with one of its ends the curved surface of the filter chamber and extends its opening to the terminal part opposite said surface so as to suck the coarser dust which are collected and circulate behind said surface.

**3.** Filtering device in accordance with claim 2 **characterized in that** the above mentioned suction mouth consists of two tubes (t1,t2) fitted one into the other with the external tube being designed to suck fine dust and having one of its end leading to the cylindrical suction duct (16) and being open at the side through a crack (f) provided with a mouth designed to run near the filtering diaphragm with the inner tube being designed for suction of the coarse dust and having one end entering the cylindrical suction duct (16) and the other end designed to run close to the cylindrical surface of the filter chamber.

**4.** Filtering device in accordance with claim 3 **characterized in that** the external tube is slightly truncated cone shaped and the inner one is virtually cylindrical in shape.

**5.** Filtering device in accordance with claim 1 **characterized in that** in the lower part of the bottom of the filter chamber there is a suction hole designed to carry off coarser dust which are collected and circulate behind the cylindrical surface of the filter chamber.

**6.** Filtering device in accordance with claim 2 or 3 **characterized by** the further presence in combination of the following items:
- a side chamber in which the air issuing from the above mentioned first filtering diaphragm (14,14') is directly inlet,
- another stationary flat filtering diaphragm (23,24) located on a flat surface of the above mentioned side chamber opposite the one on which is located the above mentioned first filtering diaphragm and designed for separation of fine dust, and
- another elongated suction mouth (25,26) placed inside the above mentioned side chamber in front of and near the above mentioned additional filtering diaphragm and rotating around the axis of the above mentioned cylindrical chamber and of a length and arrangement such as to pass along the entire surface of the additional filtering diaphragm with each rotation and leading to the above mentioned cylindrical suction duct (16).

**7.** Filtering device in accordance with claim 1 **characterized by** at least two filtering diaphragms on mutually parallel planes and at least two related suction mouths as well as a tube (34) with inside diameter greater than the outside diameter of the cylindrical suction duct (16) fitted therein in the section included between the sides of the filtering diaphragms from which issues the filtered air and which is welded at its ends to the walls (35) in which are fitted the filtering diaphragms.
